# EUROPEAN PATENT APPLICATION

(11) **EP 2 757 646 A1**
(43) Date of publication of application: **23.07.2014**
(21) Application number: 11872490.5
(22) Date of filing: 13.09.2011
(51) Int. Cl.: H02G 11/02, B60K 1/04, B60L 11/18, B65H 75/38, H02J 7/00

(54) **CHARGING CABLE ACCOMMODATION DEVICE AND VEHICLE**

(71) Applicant: Toyota Jidosha Kabushiki Kaisha, Toyota-shi, Aichi 471-8571 (JP)
(72) Inventor: KINOMURA, Shigeki, Toyota-shi Aichi 471-8571 (JP)
(74) Representative: Winter, Brandl, Fürniss, Hübner, Röss, Kaiser, Polte - Partnerschaft
(86) International application number: PCT/JP2011/070807
(87) International publication number: WO 2013/038491

(57) **Abstract**

A charging stand includes: a charging cable provided with a connector connected to a vehicle; a holding unit to hold the connector; and a reel to wind the charging cable automatically when the connector is placed on the holding unit. A vehicle includes: a charging cable provided with a plug connected to an external power supply; a holding unit to hold the plug; and a reel to wind the charging cable automatically when the plug is placed on the holding unit.

## Description

### TECHNICAL FIELD

The present invention relates to a charging cable accommodation device and a vehicle, and more specifically to technology employed to automatically accommodate a charging cable.

### BACKGROUND ART

Some known electric and hybrid vehicles can travel with an electric motor serving as a driving source. The electric or hybrid vehicle has mounted therein a battery or a similar power storage device, which is chargeable with electric power supplied from an external power supply via a charging stand provided in premises or the like. As one example, Japanese Patent Laying-Open No. 8-33121 (PTD 1) describes that a charging cable pulled out of an accommodation device is used to interconnect a commercial power supply and a vehicle.

### CITATION LIST

### PATENT DOCUMENT

PTD 1: Japanese Patent Laying-Open No. 8-33121

### SUMMARY OF INVENTION

### TECHNICAL PROBLEM

When a charging cable is used, and the charging has been done, the user must accommodate the charging cable in an accommodation device himself/herself. This may impair the user's convenience. An object of the present invention is to enhance the user's convenience after the user has finished charging.

### SOLUTION TO PROBLEM

In an embodiment, a device to accommodate a charging cable provided with a connector connected to a vehicle includes: a holding unit to hold the connector; and a reel to wind the charging cable automatically when the connector is placed on the holding unit.

This configuration allows the charging cable to be accommodated automatically when the user places the connector on the holding unit. This enhances the user's convenience after the user has finished charging.

In another embodiment, the device to accommodate a charging cable further includes: a spring to cause the reel to rotate in a direction to wind the charging cable; an engagement member to engage with the reel to prevent the reel from rotating; and a disengagement device to disengage the engagement member from the reel when the connector is placed on the holding unit.

This configuration allows the spring's resilient force to be utilized to rotate the reel to wind the charging cable.

In still another embodiment, the device to accommodate a charging cable further includes an electric motor to rotate the reel in a direction to wind the charging cable when the connector is placed on the holding unit.

This configuration allows the electric motor to rotate the reel to wind the charging cable.

In still another embodiment, a vehicle includes: a charging cable provided with a plug connected to a power supply external to the vehicle; a holding unit to hold the plug; and a reel to wind the charging cable automatically when the plug is placed on the holding unit.

This configuration allows the charging cable to be accommodated automatically when the user places the plug on the holding unit. This enhances the user's convenience after the user has finished charging.

In still another embodiment, the vehicle further includes: a spring to cause the reel to rotate in a direction to wind the charging cable; an engagement member to engage with the reel to prevent the reel from rotating; and a disengagement device to disengage the engagement member from the reel when the plug is placed on the holding unit.

This configuration allows the spring's resilient force to be utilized to rotate the reel to wind the charging cable.

In still another embodiment, the vehicle further includes an electric motor to rotate the reel in a direction to wind the charging cable when the plug is placed on the holding unit.

This configuration allows the electric motor to rotate the reel to wind the charging cable.

### ADVANTAGEOUS EFFECT OF INVENTION

Allowing a charging cable to be automatically accommodated enhances the user's convenience after the user has finished charging.

### BRIEF DESCRIPTION OF DRAWINGS

Fig. 1 generally, schematically shows a system in a first embodiment for charging a battery of a vehicle.
Fig. 2 generally, schematically shows the vehicle in the first embodiment.
Fig. 3 is a diagram (1) showing a charging stand in the first embodiment.
Fig. 4 is a diagram (2) showing a charging stand in the first embodiment.
Fig. 5 is a diagram (5) showing a charging stand in the first embodiment.
Fig. 6 generally, schematically shows a system for charging a battery of a vehicle and the vehicle in a second embodiment.
Fig. 7 is a diagram (1) showing a charging stand in the second embodiment.
Fig. 8 is a diagram (2) showing a charging stand in the second embodiment.

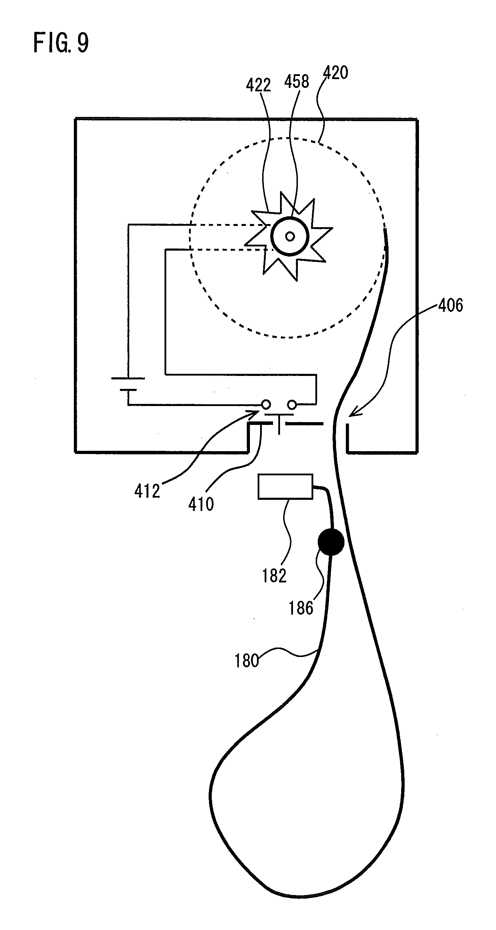

Fig. 9 is a diagram (3) showing a charging stand in the second embodiment.

### DESCRIPTION OF EMBODIMENTS

Hereinafter reference will be made to the drawings to describe the present invention in embodiments. In the drawings, identical or corresponding components are identically denoted and will not be described repeatedly.

### First Embodiment

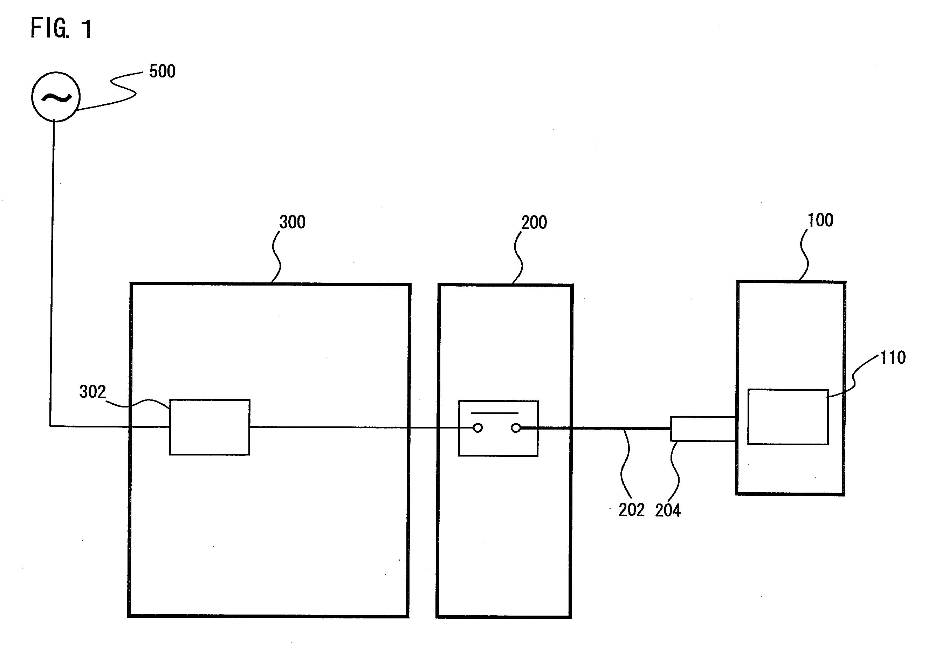

With reference to Fig. 1, as one example, a vehicle 100 is supplied with electric power via a charging stand 200 and premises 300 from a commercial power supply 500. In the present embodiment, vehicle 100 has a battery 110 charged by an alternating current supplied from commercial power supply 500 via premises 300. Battery 110 may be charged by a direct current supplied from a battery (not shown) installed in premises 300.

Charging stand 200 includes a charging cable 202 and a charging connector 204. Charging cable 202 has one end connected to charging stand 200 and has the other end provided with charging connector 204. As shown in Fig. 1, charging connector 204 is connected to the vehicle.

When charging connector 204 is connected to vehicle 100, charging stand 200 supplies electric power to the vehicle from commercial power supply 500. As one example, charging stand 200 is electrically connected to a distribution switchboard 302 provided in premises 300. Distribution switchboard 302 is connected to commercial power supply 500. Charging stand 200 will be described later more specifically.

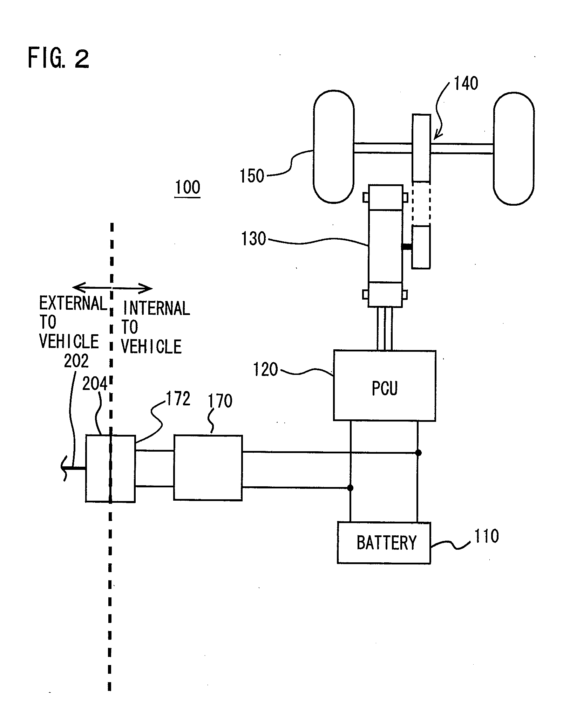

Reference will now be made to Fig. 2 to describe vehicle 100. Vehicle 100 includes battery 110, a power control unit (PCU) 120, a motor generator 130, a reduction gear 140, and a driving wheel 150.

Battery 110 is for example a lithium ion battery, a nickel metal hydride battery, a lead battery, or the like. Battery 110 may be replaced with a capacitor.

Battery 110 is connected to PCU 120. Battery 110 supplies electric power to PCU 120 to generate force to drive vehicle 100. Furthermore, battery 110 receives electric power generated by motor generator 130 and stores the received electric power therein. Battery 110 has a voltage for example of approximately 200 V.

PCU 120 includes a converter for boosting power supply voltage received from battery 110, an inverter for converting direct current electric power that has been boosted by the converter into alternating current electric power for driving motor generator 130, and the like.

Motor generator 130 is an alternating current rotating electric machine, and for example is a permanent-magnet type synchronous motor including a rotor having a permanent magnet embedded therein. Motor generator 130 outputs a torque which is in turn transmitted via reduction gear 140 to driving wheel 150. When vehicle 100 is braked regeneratively, motor generator 130 can generate electric power by the rotary force of driving wheel 150. The generated electric power is then converted by PCU 120 into electric power for charging battery 110.

Note that while Fig. 2 shows a configuration provided with a single motor generator, more than one motor generator may alternatively be provided.

Furthermore, a hybrid vehicle having an engine in addition to motor generator 130 has the engine and motor generator 130 cooperatively operated to generate force required to drive the vehicle. In that case, it is also possible to charge battery 110 with electric power generated as the engine rotates.

That is, vehicle 100 according to the present embodiment represents a vehicle equipped with an electric motor for generating force to drive the vehicle, and includes a hybrid vehicle using an engine and an electric motor to generate force to drive the vehicle, an electric vehicle and a fuel cell vehicle that are not equipped with an engine, and the like.

Vehicle 100 further includes a charging device 170 and an inlet 172. Charging device 170 is a device for charging battery 110 with electric power received from commercial power supply 500. Charging device 170 receives an alternating current supplied from commercial power supply 500 and converts the received alternating current into direct current, and charging device 170 also boosts or buckboosts voltage to desired voltage and supplies the boosted or buckboosted voltage to battery 110.

Charging device 170 is connected to inlet 172.

Inlet 172 is provided at an external surface of vehicle 100. Connected to inlet 172 is charging connector 204 of charging cable 202. Inlet 172 is thus connected to commercial power supply 500 via charging cable 202.

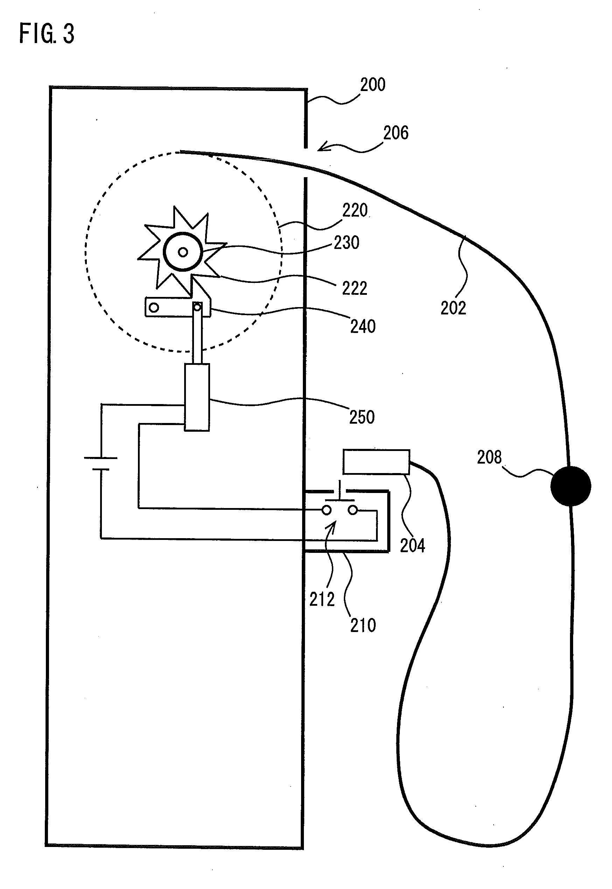

With reference to Fig. 3, charging stand 200 will further be described. Charging stand 200 that includes charging cable 202 and charging connector 204 further includes a holding unit 210, a reel 220, a spiral spring 230, a latch 240, and a solenoid 250.

Holding unit 210 holds charging connector 204. After vehicle 100 has been charged, the user places charging connector 204 on holding unit 210. Holding unit 210 is provided with a switch 212. When charging connector 204 is not placed on holding unit 210, switch 212 opens. When charging connector 204 is placed on holding unit 210 switch 212 is closed. When switch 212 is closed, solenoid 250 is energized.

On reel 220, charging cable 202 that has been extracted out of charging stand 200 via an outlet port 206 is wound and thus accommodated. Reel 220 is rotated in a direction to wind charging cable 202 as spiral spring 230 exerts resilient force. Reel 220 is radially provided with a latch tooth 222.

Latch 240 is supported to be capable of swinging and is also provided to engage with reel 220 via latch tooth 222 as a spring (not shown) exerts resilient force. While latch 240 engages with latch tooth 222 of reel 220, latch 240 prevents reel 220 from rotating. In the present embodiment, as one example, latch 240 prevents reel 220 from rotating in a direction to wind charging cable 202.

When reel 220 rotates in a direction allowing charging cable 202 to be pulled out, latch 240 is forced to move in a direction away from latch tooth 222. As a result, reel 220 is accepted in a direction allowing charging cable 202 to be pulled out.

Solenoid 250 causes latch 240 to swing. More specifically, when solenoid 250 is energized, latch 240 is swung away from latch tooth 222 of reel 220. Thus, when charging connector 204 is placed on holding unit 210, solenoid 250 disengages latch 240 from reel 220.

Once latch 240 has been disengaged from reel 220, reel 220 rotates as spiral spring 230 exerts resilient force, and reel 220 thus automatically winds charging cable 202. This eliminates the necessity of the user winding charging cable 202 on reel 220 manually.

Charging cable 202 has a stopper 208 thereon, and when stopper 208 abuts against outlet port 206, winding charging cable 202 ends.

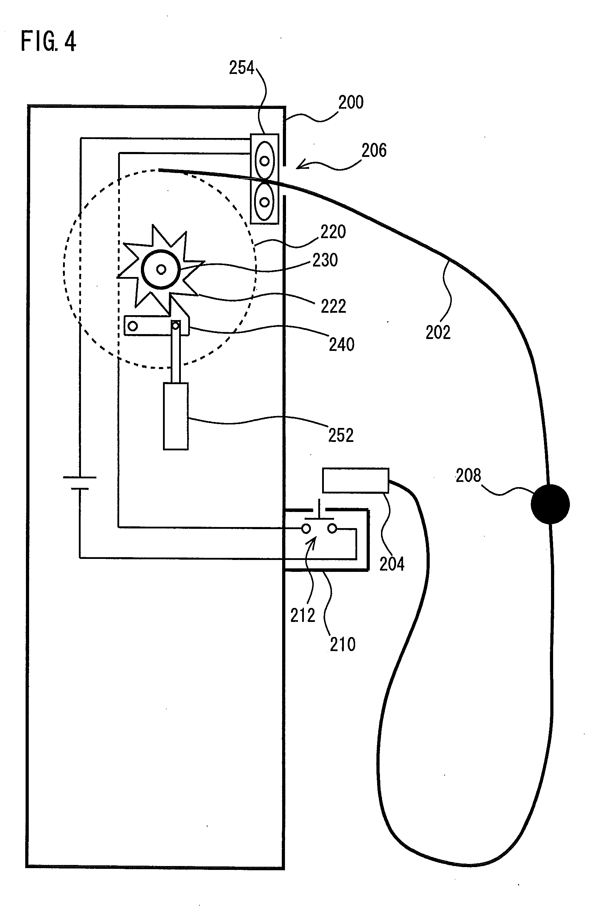

Solenoid 250 provided to cause latch 240 to swing may be replaced with a damper 252 to cause latch 240 to swing slowly, and an actuator 254 to pull out charging cable 202 by a prescribed length, as shown in Fig. 4. In that case, when charging connector 204 is placed on holding unit 210 and switch 212 is closed, actuator 254 pulls out charging cable 202 by the prescribed length, and accordingly, reel 220 rotates, and latch 240 is also forced to move in a direction away from latch tooth 222. As a result, latch 240 is disengaged from reel 220. Damper 252 acts to provide damping to prevent latch 240 from engaging with reel 220, and accordingly, reel 220 rotates in a direction to wind charging cable 202 as spiral spring 230 exerts resilient force. As a result, charging cable 202 is wound automatically.

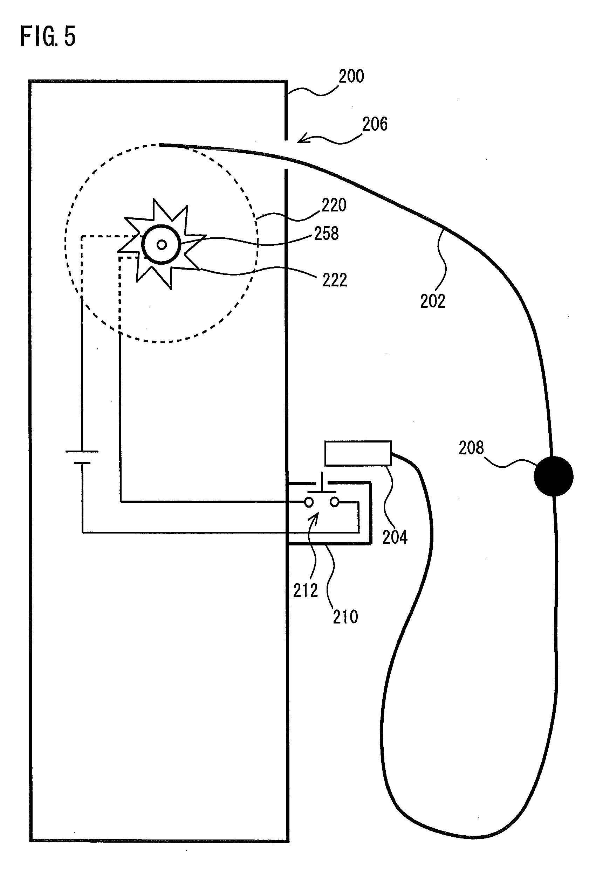

Alternatively, as shown in Fig. 5, an electric motor 258 may be provided to rotate reel 220 in a direction to wind charging cable 202 when charging connector 204 is placed on holding unit 210 and switch 212 is closed. In that case, when electric motor 258 has a current exceeding a threshold value, electric motor 258 may be stopped to stop winding charging cable 202.

### Second Embodiment

Hereinafter, an embodiment will be described to accommodate a charging cable in vehicle 100, rather than charging stand 200. Note that the same configuration as the first embodiment is identically denoted and will not be described repeatedly.

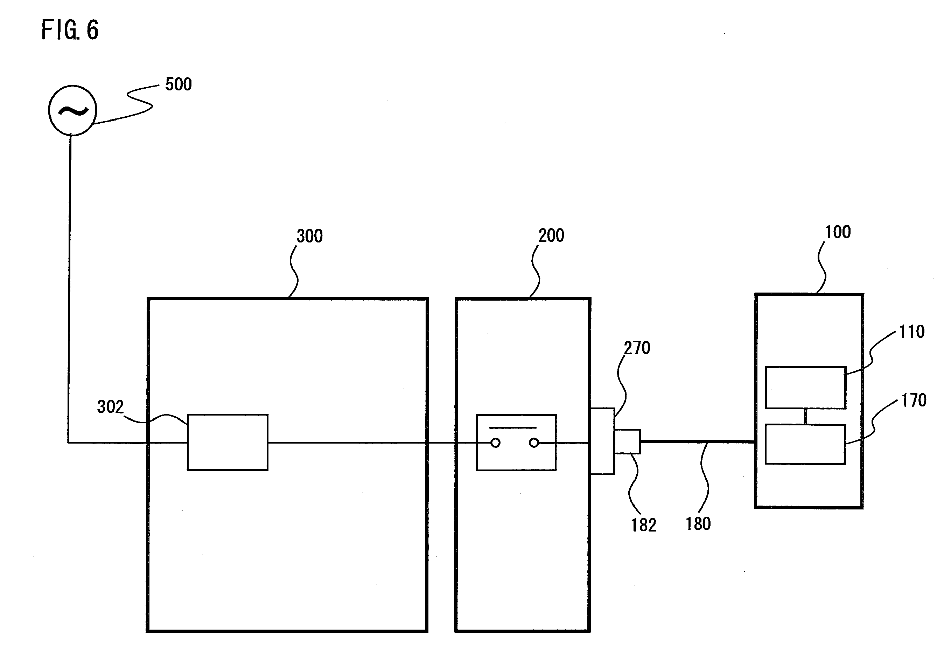

With reference to Fig. 6, as one example, charging stand 200 is provided with an electrical outlet 270. The vehicle includes a charging cable 180 and a plug 182. Charging cable 180 has one end connected to charging device 170 of vehicle 100 and has the other end provided with plug 182. Plug 182 is connected to electrical outlet 270 of charging stand 200, as shown in Fig. 6. Plug 182 may be adapted to be connected to an electrical outlet (not shown) provided in premises 300.

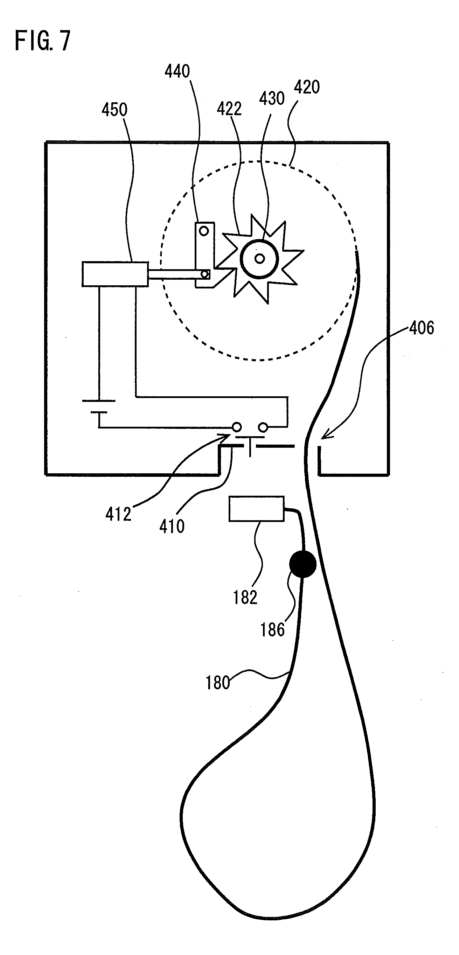

With reference to Fig. 7, vehicle 100 that includes charging cable 180 and plug 182 further includes a holding unit 410, a reel 420, a spiral spring 430, a latch 440, and a solenoid 450.

Holding unit 410 holds plug 182. After vehicle 100 has been charged, the user places plug 182 on holding unit 410. Holding unit 410 is provided with a switch 412. When plug 182 is not placed on holding unit 410, switch 212 opens. When plug 182 is placed on holding unit 410 switch 412 is closed. When switch 412 is closed, solenoid 450 is energized.

On reel 420, charging cable 180 that has been extracted out of charging stand 200 via an outlet port 184 is wound and thus accommodated. Reel 420 is rotated in a direction to wind charging cable 180 as spiral spring 430 exerts resilient force. Reel 420 is radially provided with a latch tooth 422.

Latch 440 is supported to be capable of swinging and is also provided to engage with reel 420 via latch tooth 422 as a spring (not shown) exerts resilient force. While latch 440 engages with latch tooth 422 of reel 420, latch 440 prevents reel 420 from rotating. In the present embodiment, as one example, latch 440 prevents reel 420 from rotating in a direction to wind charging cable 180.

When reel 420 rotates in a direction allowing charging cable 180 to be pulled out, latch 440 is forced to move in a direction away from latch tooth 422. As a result, reel 420 is accepted in a direction allowing charging cable 180 to be pulled out.

Solenoid 450 causes latch 440 to swing. More specifically, when solenoid 450 is energized, latch 440 is swung away from latch tooth 422 of reel 420. Thus, when plug 182 is placed on holding unit 410, solenoid 450 disengages latch 440 from reel 420.

Once latch 440 has been disengaged from reel 420, reel 420 rotates as spiral spring 430 exerts resilient force, and reel 420 thus automatically winds charging cable 180. This eliminates the necessity of the user winding charging cable 180 on reel 420 manually.

Charging cable 180 has a stopper 186 thereon, and when stopper 186 abuts against outlet port 184, winding charging cable 180 ends.

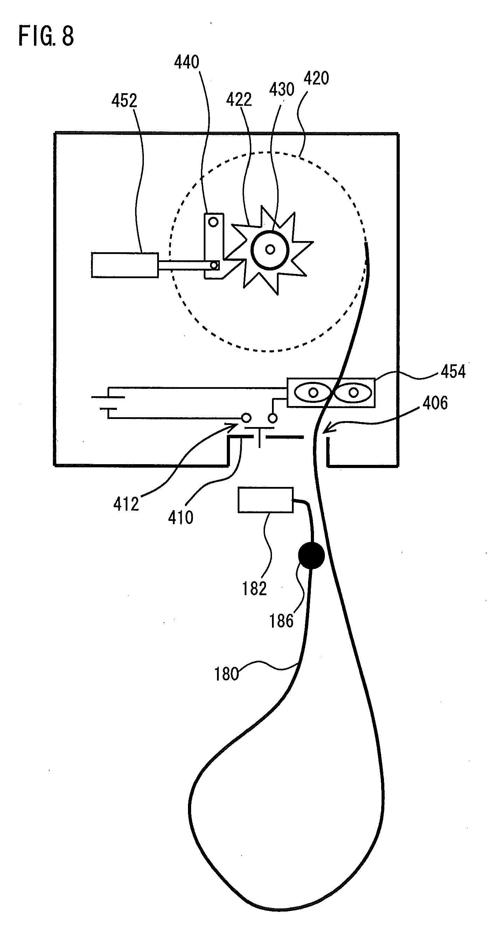

Solenoid 450 provided to cause latch 440 to swing may be replaced with a damper 452 to cause latch 440 to swing slowly, and an actuator 454 to pull out charging cable 180 by a prescribed length, as shown in Fig. 8. In that case, when plug 182 is placed on holding unit 410 and switch 412 is closed, actuator 454 pulls out charging cable 180 by the prescribed length, and accordingly, reel 420 rotates, and latch 440 is also forced to move in a direction away from latch tooth 422. As a result, latch 440 is disengaged from reel 420. Damper 452 acts to provide damping to prevent latch 440 from engaging with reel 420, and accordingly, reel 420 rotates in a direction to wind charging cable 180 as spiral spring 430 exerts resilient force. As a result, charging cable 180 is wound automatically.

Alternatively, as shown in Fig. 8, an electric motor 458 may be provided to rotate reel 420 in a direction to wind charging cable 180 when plug 182 is placed on holding unit 410 and switch 412 is closed. In that case, when electric motor 458 has a current exceeding a threshold value, electric motor 458 may be stopped to stop winding charging cable 180.

It should be understood that the embodiments disclosed herein have been described for the purpose of illustration only and in a non-restrictive manner in any respect. The scope of the present invention is defined by the terms of the claims, rather than the description above, and is intended to include any modifications within the scope and meaning equivalent to the terms of the claims.

### REFERENCE SIGNS LIST

100: vehicle, 110: battery, 120: PCU, 130: motor generator, 140: reduction gear, 150: driving wheel, 170: charging device, 172: inlet, 180: charging cable, 182: plug, 184: outlet port, 186: stopper, 200: charging stand, 202: charging cable, 204: charging connector, 206: outlet port, 208: stopper, 210: holding unit, 212: switch, 220: reel, 222: latch tooth, 230: spiral spring, 240: latch, 250: solenoid, 252: damper, 254: actuator, 258: electric motor, 270: electrical outlet, 300: premises, 302: distribution switchboard, 410: holding unit, 412: switch, 420: reel, 422: latch tooth, 430: spiral spring, 440: latch, 450: solenoid, 452: damper, 454: actuator, 458: electric motor, 500: commercial power supply.

## Claims

1. A device to accommodate a charging cable provided with a connector connected to a vehicle, comprising:
a holding unit to hold said connector; and
a reel to wind said charging cable automatically when said connector is placed on said holding unit.

2. The device to accommodate a charging cable according to claim 1, further comprising:
a spring to cause said reel to rotate in a direction to wind said charging cable;
an engagement member to engage with said reel to prevent said reel from rotating; and
a disengagement device to disengage said engagement member from said reel when said connector is placed on said holding unit.

3. The device to accommodate a charging cable according to claim 1, further comprising an electric motor to rotate said reel in a direction to wind said charging cable when said connector is placed on said holding unit.

4. A vehicle comprising:
a charging cable provided with a plug connected to a power supply external to the vehicle;
a holding unit to hold said plug; and
a reel to wind said charging cable automatically when said plug is placed on said holding unit.

5. The vehicle according to claim 4, further comprising:
a spring to cause said reel to rotate in a direction to wind said charging cable;
an engagement member to engage with said reel to prevent said reel from rotating; and
a disengagement device to disengage said engagement member from said reel when said plug is placed on said holding unit.

6. The vehicle according to claim 4, further comprising an electric motor to rotate said reel in a direction to wind said charging cable when said plug is placed on said holding unit.
